# EUROPÄISCHE PATENTANMELDUNG

(11) **EP 1 586 800 A1**
(43) Veröffentlichungstag der Anmeldung: **19.10.2005**
(21) Anmeldenummer: 04405228.0
(22) Anmeldetag: 15.04.2004
(51) Int. Cl.: F16L 19/06

(54) **Vorrichtung und Verfahren zum Verbinden eines starren Rohres mit einem im Wesentlichen flexiblen Rohr**

(71) Anmelder: AGRO AG, CH-5502 Hunzenschwil (CH)
(72) Erfinder: Lehmann, Christoph, 5634 Merenschwand (CH)
(74) Vertreter: Groner, Manfred

(57) **Zusammenfassung**

Der Rohranschluss weist einen Grundkörper (3) auf, der einen Durchgang (12) und ein erstes Ende (9) zur Aufnahme des starren Rohres (7) besitzt. Ein zweites Ende (10) des Grundkörpers (3) ist mit einem Innengewinde (11) versehen, das zur Aufnahme einer Kabel- oder Schlauchverschraubung (B, B') vorgesehen ist. Im Grundkörper (3) ist ein Presseinsatz (5) angeordnet. Beim Einschrauben der Kabel- oder Schlauchverschraubung (B, B') in das genannte Innengewinde (11) wird das starre Rohr (7) mit dem genannten Presseinsatz (5) am Grundkörper fixiert. Vorzugsweise wird das starre Rohr (7) mit einem Klemmring (6) fixiert.

## Beschreibung

Die Erfindung betrifft einen Rohranschluss nach dem Oberbegriff des Anspruchs 1.

Vorrichtungen zum Verbinden eines starren Rohres mit einem zweiten Rohr sind in zahlreichen Ausführungen bekannt geworden. Beispielsweise zeigt die WO 00/70259 eine solche Vorrichtung. Diese besitzt einen Klemmring, mit dem ein flexibles Rohr zwischen diesem und dem starren Rohr über den gesamten Umfang verklemmt wird. Die Verbindung zwischen dem flexiblen Rohr und dem starren Rohr ist hier im Wesentlichen unlösbar. Um die Verbindung herzustellen, ist hier eine besondere Presszange erforderlich.

Der Erfindung liegt die Aufgabe zugrunde, einen Rohranschluss der genannten Art zu schaffen, die es ermöglicht, mit lediglich einem üblichen Gabelschlüssel eine kostengünstige und lösbare Verbindung zwischen einem im Wesentlichen starren und einem zweiten Rohr oder Kabelverschraubung herzustellen. Die Vorrichtung soll sich insbesondere zum Verlegen von elektrischen Leitungen und Kabeln in der Gebäudetechnik und in industriellen Anwendungen eignen.

Die Aufgabe ist bei einem gattungsgemässen Rohranschluss gemäss Anspruch 1 gelöst. Beim erfindungsgemässen Rohranschluss ist eine Kabel- oder Schlauchverschraubung zum Anschluss eines Leitungsteils vorgesehen. Das Leitungsteil ist insbesondere ein elektrisches Kabel oder ein flexibles Rohr. Das starre Rohr wird am Grundkörper fixiert. Hierzu sind in diesem Grundkörper ein Presseinsatz und ein Klemmring angeordnet. Wird die Kabel- oder Schlauchverschraubung in den Grundkörper eingeschraubt, so wird das starre Rohr mit dem genannten Presseinsatz im Grundkörper festgelegt. Die Kabel- oder Schlauchverschraubung dient hier somit als Mittel zum Festklemmen des starren Rohres im Grundkörper. Dadurch ist es möglich, sowohl das Leitungsteil als auch das erste Rohr in einfacher Weise zu fixieren. Der erfindungsgemässe Rohranschluss kann ausser dem Verbinden des starren Rohres mit dem Leitungsteil weitere Funktionen erfüllen. Beispielsweise kann im Fall der Kabelverschraubung der Rohranschluss zudem auch zum Dichten und Klemmen eines aus dem starren ersten Rohr herausführenden Kabels oder Schlauches oder einer pneumatischen oder hydraulischen Leitung verwendet werden.

Die Verbindung des starren Rohres zum Grundkörper als auch die Verbindung des flexiblen Rohres zur Kabel- oder Schlauchverschraubung sind vorzugsweise lösbar. Das starre Rohr kann gelöst werden, indem die Kabel- oder Schlauchverschraubung wieder aus dem Grundkörper herausgeschraubt wird.

Der Klemmring ist gemäss einer Weiterbildung der Erfindung aus einem flexiblen, vorzugsweise elastischen Material, beispielsweise aus einem Kunststoff wie Polyethylen, Gummi oder einem gummiartigen Werkstoff hergestellt. Damit kann eine dichte Verbindung zwischen dem Grundkörper und dem starren Rohr hergestellt werden. Trotzdem kann diese Verbindung lösbar ausgebildet sein.

Eine besonders zuverlässige Klemmung ergibt sich dann, wenn der Presseinsatz direkt am Klemmring anliegt. Dieser Presseinsatz ist beispielsweise ein Ring, der achsial verschiebbar ist und mit welchem der Klemmring zusammengepresst werden kann.

Nach einer Weiterbildung der Erfindung ist vorgesehen, dass in den Grundkörper ein Gewindeeinsatz eingeschraubt ist. Der Gewindeeinsatz kann nach einer Variante mit einer Presspassung im Grundkörper fixiert sein und mit diesem eine feste Einheit bilden.

Die Verbindung zwischen dem starren Rohr und dem Leistungsteil ist dann besonders schnell und einfach herstellbar, wenn gemäss einer Weiterbildung der Erfindung die Kabel- oder Schlauchverschraubung eine Steckkupplung bildet. Eine solche Steckkupplung ermöglicht einen Anschluss des Leitungsteil, indem dieses in einfacher Weise in eine entsprechende Öffnung der Kabel- oder Schlauchverschraubung eingesetzt wird. Das Leitungsteil wird hierbei beispielsweise mit Rastmitteln festgelegt. Diese Rastmittel können beispielsweise Rastnasen aufweisen. Dadurch eignet sich die erfindungsgemässe Vorrichtung insbesondere zum Anschliessen eines sogenannten Wellrohres. Ein solches Wellrohr bildet insbesondere ein Schutzrohr für Elektrokabel und dergleichen.

Die Erfindung betrifft zudem ein Verfahren zum Verbinden eines im Wesentlichen starren Rohres mit einem Leitungsteil, mit einem ersten Teil, in welchem das starre Rohr festzulegen ist und einem zweiten Teil, in welchem das Leitungsteil festzulegen ist. Das Verfahren ist dadurch gekennzeichnet, dass das starre Rohr mit seinem einen Ende in das erste Teil eingeschoben wird und dass dieses Ende mittels eines Presseinsatzes festgelegt wird, der durch Einsetzen des zweiten Teils in das erste Teil bewegt wird.

Beim erfindungsgemässen Verfahren werden somit zwei Teile miteinander verschraubt, wobei hierbei der Presseinsatz bewegt wird und dadurch das starre Rohr festgelegt wird. Das zweite Teil kann hier somit als Werkzeug angesehen werden, mit welchem das starre Rohr im ersten Teil fixiert wird.

Weitere vorteilhafte Merkmale ergeben sich aus den abhängigen Patentansprüchen, der nachfolgenden Beschreibung sowie der Zeichnung.

Ein Ausführungsbeispiel der Erfindung wird nachfolgend anhand der Zeichnung näher erläutert. Es zeigen:
- Fig. 1: eine teilweise geschnittene Ansicht eines erfindungsgemässen Rohranschlusses,
- Fig. 2: eine teilweise geschnittene Ansicht des ersten Teils,
- Fig. 3: eine teilweise geschnittene Ansicht des zweiten Teils, der als Schlauchkupplung ausgebildet ist und
- Fig. 4: eine teilweise geschnittene Ansicht eines erfindungsgemässen Rohranschlusses, wobei das zweite Teil als Kabelverschraubung ausgebildet ist.

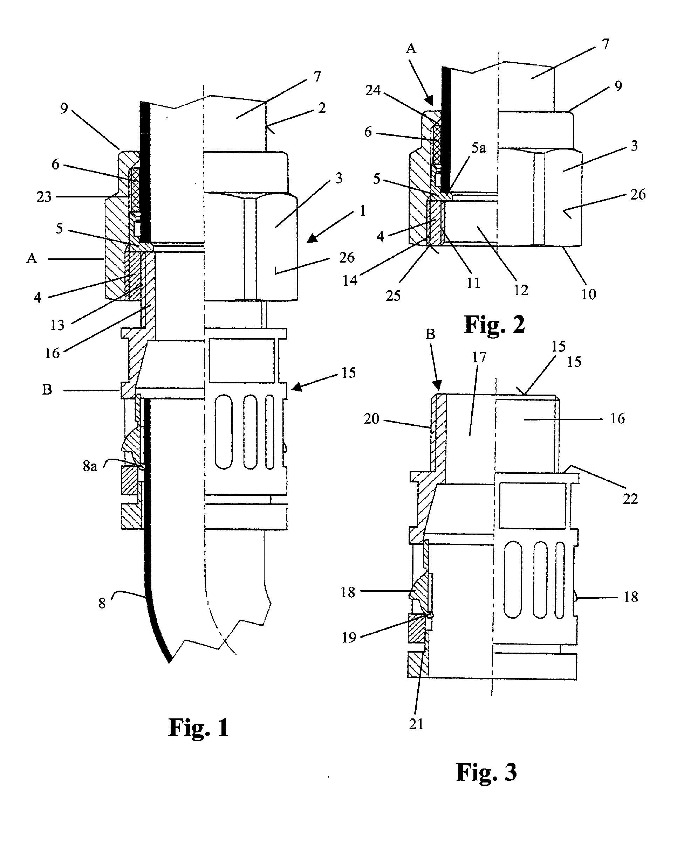

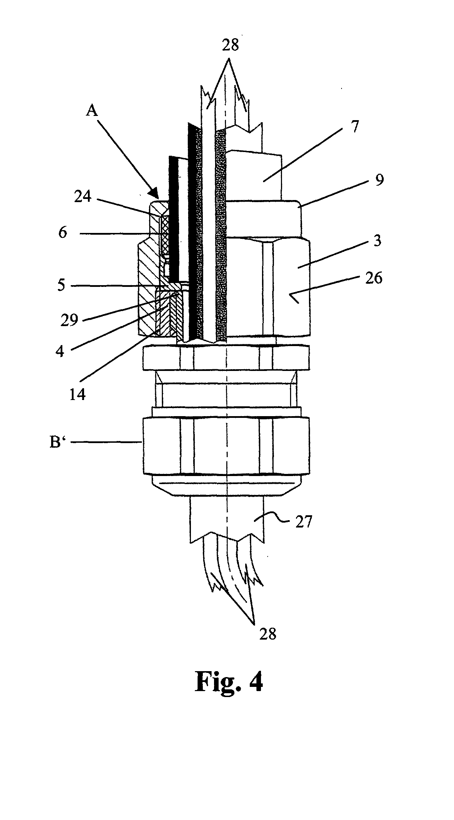

Der in Fig. 1 gezeigte Rohranschluss 1 dient zum Verbinden eines starren Rohres 7 mit einem Leitungsteil 8 bzw. 27. Das starre Rohr 7 ist beispielsweise ein Eisenrohr oder ein Kunststoffrohr, während das Leitungsteil 8 gemäss Fig. 4 ein Kabel 27 oder beispielsweise ein an sich bekanntes flexibles Wellrohr aus Kunststoff ist, das von Hand ohne weiteres gebogen werden kann. Das starre Rohr 7 ist selbstverständlich in der Regel nicht absolut starr, sondern kann beispielsweise mit einem geeigneten Werkzeug ebenfalls gebogen werden. Das Leitungsteil 8 kann flexibel oder im Wesentlichen starr sein. Das Rohr 7 kann insbesondere eine Leitung für Elektroinstallationen und insbesondere eine elektrische Leitung sein. Im Rohr 7 verlaufen beispielsweise gemäss Fig. 4 elektrische Leitungsdrähte 28 des Kabels 27.

Der Rohranschluss 1 besteht im Wesentlichen aus einem ersten Teil A und einem zweiten Teil B bzw. B'. Das Teil A nimmt ein Ende des starren Rohres 7 und das Teil B bzw. B' ein Ende des Leitungsteils 8 bzw. 27 auf. Beide Teile A und B bzw. B' sind lösbar miteinander verschraubt. Das Teil B ist gemäss den Figuren 1 und 3 als Schlauchverschraubung ausgebildet, während das Teil B' gemäss Fig. 4 eine Kabelverschraubung ist.

Das Teil A besitzt einen Grundkörper 3 mit einem Aussensechskant 26. Der Grundkörper 3 ist beispielsweise aus Messing oder einem anderen geeigneten Werkstoff hergestellt. Er besitzt einen Durchgang 12, der von einem ersten Ende 9 zu einem zweiten Ende 10 verläuft. Das erste Ende 9 nimmt das anzuschliessende Ende des starren Rohres 7 auf. Dieses ist mit einer Stirnseite 7a bis zum Anschlag an einen Absatz 5a eines Presseinsatzes 5 eingeschoben. Dieser Presseinsatz 5 befindet sich in einem glatten Bereich 23 des Durchgangs 12. In diesem glatten Bereich 23 befindet sich ebenfalls ein Klemmring 6, der wie ersichtlich hülsenförmig ausgebildet ist und vorzugsweise aus einem flexiblen Werkstoff besteht. Dieser Klemmring 6 liegt an einem nach innen gerichteten umlaufenden Wulst 24 an, der in Fig. 1 eine Bewegung des Klemmrings 6 nach oben begrenzt.

Der Grundkörper 3 besitzt zudem ein Innengewinde 13, in das ein hülsenförmiger Gewindeeinsatz eingeschraubt ist, der ein Aussengewinde 14 sowie ein Innengewinde 11 besitzt. Dieser Gewindeeinsatz 4 ist beispielsweise ebenfalls aus Messing oder einem anderen geeigneten Werkstoff hergestellt. Grundsätzlich könnte dieser Gewindeeinsatz 4 auch aus Kunststoff hergestellt sein. Er könnte zudem mit einer Presspassung im Grundkörper 3 befestigt sein und mit diesem eine feste Einheit bilden. Dieser Gewindeeinsatz 4 liegt mit einer inneren Fläche am Presseinsatz 5 an. Der Presseinsatz 5 liegt wiederum mit einem inneren Ende am Klemmring 6 an. Der Gewindeeinsatz 4 bildet eine Gewindereduktion und ermöglicht eine einfache Montage des Presseinsatzes 5 und des Klemmrings 6. Grundsätzlich ist eine Ausführung denkbar, bei welcher der Gewindeeinsatz 4 weggelassen und der Grundkörper 3 direkt mit dem Innengewinde 11 versehen ist. Der Gewindeeinsatz 4 kann nach einer weiteren Variante auch mit einer Presspassung im Grundkörper 3 fixiert sein.

Das Teil B ist vorzugsweise einstückig ausgebildet und besitzt einen Gewindestutzen 16 mit einem Aussengewinde 20 und einer Stirnfläche 15. Das Teil B besitzt zudem einen Durchgang 17, in den Rastnasen 19 hineinragen, die jeweils durch ein Rastelement 18 gebildet werden. Diese Rastelemente 18 sind angeformte Rastzungen, die so ausgebildet sind, dass die Rastnasen 19 radial nach aussen elastisch auslenkbar sind. Das Teil B ist beispielsweise aus einem Kunststoff als Spritzgussteil hergestellt. Die Rastelemente 18 sind somit ebenfalls aus einem Kunststoff hergestellt. Das Leitungsteil 8, das in diesem Fall insbesondere als Wellrohr ausgebildet ist, kann durch eine Öffnung 21 in das Teil B eingeschoben werden, wobei die Rastnasen 19 an der Aussenseite des Leitungsteils 8 verrastet werden. Das Leitungsteil 8 ist hier vorzugsweise ein Wellrohr, das auf der Aussenseite umlaufende Rillen aufweist, in welche die Rastnasen 19 einrasten. Die Rastelemente 18 können so ausgebildet sein, dass der Rasteingriff gelöst werden kann. Grundsätzlich ist hier aber auch eine unlösbare Verbindung denkbar.

Der Gewindestutzen 16 ist so ausgebildet, dass er in den Gewindesatz 14 eingeschraubt werden kann. Ist der Gewindestutzen 16 vollständig in den Gewindeeinsatz 4 eingeschraubt, so liegt eine Schulter 22 an einer Stirnseite 25 des Gewindeeinsatzes 4 an. Die Länge des Gewindestutzen 16 ist so bemessen, dass er beim Einschrauben schliesslich am Absatz 5a des Presseinsatzes 5 anliegt und diesen gegen den Klemmring 6 schiebt. Der Klemmring 6 wird dadurch zusammengepresst und infolgedessen verengt sich seine Durchgangsöffnung, so dass er schliesslich an der Aussenseite 2 des starren Rohres 3 anliegt und dieses festklemmt. Durch Einschrauben des Teils B kann somit das starre Rohr 7 zwischen dem Wulst 24 und dem Presseinsatz 5 festgeklemmt werden.

In der Fig. 1 ist das Teil B noch nicht vollständig in das Teil A hineingeschraubt und der Klemmring 6 somit noch nicht verpresst. Wird das Teil B weiter eingeschraubt, bis die Schuler 22 am Teil A anliegt, so wird der Presseinsatz 5 verschoben und dadurch der Klemmring 6 verpresst, bis er das starre Rohr 7 klemmt. Diese Klemmverbindung ist durch Herausschrauben des Gewindestutzens 16 bzw. des Teils B lösbar. Die Verbindung ist zudem dicht, da der erwähnte Klemmring 6 flexibel ausgebildet ist und im verklemmten Zustand an der Aussenseite des starren Rohres 7 und am glatten Bereich 23 des Grundkörpers 3 angepresst ist. Beim Teil B' erfolgt der Anschluss nach dem gleichen Verfahren. Das als Kabelverschraubung ausgebildete Teil B' kann diese zudem auch zum Dichten und Klemmen des Kabels 27 oder eines Schlauches oder beispielsweise einer pneumatischen oder hydraulischen Leitung verwendet werden. Der Presseinsatz 5 wird beim Teil B' durch einen Gewindestutzen 29 achsial verschoben und dadurch der Klemmring 6 zusammengepresst.

Der Gewindestutzen 29 entspricht somit dem Gewindestutzen 16 des Teils B. In der Fig. 4 ist das Teil B' noch nicht vollständig in das Teil A eingeschraubt und der Klemmring 6 noch nicht verpresst. Wird das Teil B' bis zum Anschlag weiter eingeschraubt, so wird durch den Gewindestutzen 29 der Presseinsatz 5 gegen den Klemmring 6 verschoben und dieser verpresst, bis er das starre Rohr 7 fixiert. Beim Herausschrauben des Teils B' entspannt sich der Klemmring 6, sodass schliesslich das Rohr 7 aus dem Teil B herausgezogen werden kann.

Ist das starre Rohr 7 im Grundkörper 3 festgelegt, so wird das Leitungsteil 8 angeschlossen. Hierzu wird das eine Ende 8a des Leitungsteils 8 in die Aufnahmeöffnung 21 bis zu einem Anschlag eingeschoben. Das Verrasten durch die Rastelemente 18 bzw. die Rastnasen 19 erfolgt hierbei vorzugsweise selbsttätig. Der Anschluss des zweiten Rohres entspricht damit einer sogenannten Schnellkupplung. Solche Kupplungen sind an sich als Schlauchkupplungen bekannt. Ist das Leitungsteil 8 ein Kabel, so wird dieses in an sich bekannter Weise an die Kabelverschraubung angeschlossen.

### Bezugszeichenliste

- 1.: Rohranschluss
- 2.: Aussenseite
- 3.: Grundkörper
- 4.: Gewindeeinsatz
- 5.: Presseinsatz
- 5.a: Absatz
- 6.: Klemmring
- 7.: starres Rohr
- 7.a: Stirnseite
- 8.: Leitungsteil
- 8.a: Ende
- 9.: erstes Ende
- 10.: zweites Ende
- 11.: Innengewinde
- 12.: Durchgang
- 13.: Innengewinde Grundkörper
- 14.: Aussengewinde Gewindeeinsatz
- 15.: Stirnfläche
- 16.: Gewindestutzen
- 17.: Durchgang
- 18.: Rastelement
- 19.: Rastnase
- 20.: Aussengewinde
- 21.: Aufnahmeöffnung
- 22.: Schulter
- 23.: glatter Bereich
- 24.: Wulst
- 25.: Stirnseite
- 26.: Sechskant
- 27.: Kabel
- 28.: Leitungsdrähte
- 29.: Gewindestutzen
- A: erstes Teil
- B: zweites Teil

## Patentansprüche

1. Rohranschluss zum Verbinden eines im Wesentlichen starren Rohres (7) mit einem Leitungsteil (8, 27), mit einem ersten Teil (A), das einen Grundkörper (3) aufweist, der einen Durchgang (12) und ein erstes Ende (9) zur Aufnahme des starren Rohres (7) besitzt, **dadurch gekennzeichnet, dass** ein zweites Ende (10) des Grundkörpers (3) ein Innengewinde (11) aufweist, dass im Grundkörper (3) ein Presseinsatz (5) und ein Klemmring (6) angeordnet sind, dass das Innengewinde (11) zur Aufnahme eines zweiten Teils (B, B'), vorzugsweise einer Kabel- oder Schlauchverschraubung vorgesehen ist und dass beim Einschrauben des zweiten Teils (B, B') in das genannte Innengewinde (11) das starre erste Rohr (7) mit dem genannten Klemmring (6) am Grundkörper festlegbar ist.

2. Vorrichtung nach Anspruch 1, **dadurch gekennzeichnet, dass** der Presseinsatz (5) am Klemmring (6) direkt anliegt.

3. Vorrichtung nach Anspruch 1 oder 2, **dadurch gekennzeichnet, dass** der Klemmring (6) mit dem Presseinsatz (5) zusammenpressbar ist.

4. Vorrichtung nach einem der Ansprüche 1 bis 3, **dadurch gekennzeichnet, dass** in den Grundkörper (3) ein Gewindeeinsatz (4) eingesetzt ist, welcher die Kabel- oder Schlauchverschraubung (B, B') aufnimmt.

5. Vorrichtung nach einem der Ansprüche 1 bis 4, **dadurch gekennzeichnet, dass** die Kabel- oder Schlauchverschraubung (B, B') Rastmittel (18, 19) zur Fixierung des Leitungsteils (8) aufweist.

6. Vorrichtung nach Anspruch 5, **dadurch gekennzeichnet, dass** die Kabel- oder Schlauchverschraubung (B, B') als Steckkupplung ausgebildet ist.

7. Vorrichtung nach einem der Ansprüche 1 bis 6, **dadurch gekennzeichnet, dass** sie zum Anschliessen eines Wellrohres (8) vorgesehen ist.

8. Verfahren zum Verbinden eines im Wesentlichen starren Rohres (7) mit einem Leitungsteil (8, 27), mit einem ersten Teil (A), in welchem das starre erste Rohr (7) festzulegen ist und mit einem zweiten Teil (B, B'), in welchem das Leitungsteil (8, 27) festzulegen ist, **dadurch gekennzeichnet, dass** das starre Rohr (7) mit einem Ende in das erste Teil (A) eingeschoben wird, und dass dieses Ende mittels eines Einsatzes (5) festgelegt wird, der durch Einsetzen des zweiten Teils (B, B') in das erste Teil (A) bewegt wird.

9. Verfahren nach Anspruch 8, **dadurch gekennzeichnet, dass** das zweite Teil (B, B') zum Festlegen des starren Rohrs (7) in das erste Teil (A) eingeschraubt wird.

10. Verfahren nach Anspruch 8 oder 9, **dadurch gekennzeichnet, dass** das Leitungsteil (8) am zweiten Teil (B) verrastbar ist.

11. Verfahren nach einem der Ansprüche 8 bis 10, **dadurch gekennzeichnet, dass** das Leitungsteil (8, 27) flexibel und insbesondere ein Wellrohr oder ein Kabel (27) ist.
